# EUROPEAN PATENT SPECIFICATION

(11) **EP 1 069 505 B1**
(45) Date of publication and mention of the grant of the patent: **07.05.2003**
(21) Application number: 99113929.6
(22) Date of filing: 16.07.1999
(51) Int. Cl.: G06F 11/273

(54) **Remote supporting system**
Remotestützsystem
Système de support à distance

(43) Date of publication of application: 17.01.2001
(60) Divisional application: 03004538.9
(73) Proprietor: Cast Co., Inc., Nagoya, Aichi-ken, 457-0821 (JP)
(72) Inventor: Murata, Toshihiko, Nagoya, Aichi-ken, 457-0821 (JP)
(74) Representative: Pellmann, Hans-Bernd, Dipl.-Ing.

(56) References cited:
- WO-A-97/49030
- STEVE BALDWIN: "Tech Support By Remote Control" COMPUTER SHOPPER MAGAZINE, [Online] September 1998 (1998-09), XP002124787 Retrieved from the Internet: <URL:http://www.zdnet.com/computershopper/ edit/cshopper/content/9809/340314.html> [retrieved on 1999-12-06]
- DEKOVEN B: "FROM HERE TO TIMBUKTU RESOURCE, SCREEN, AND WORK SHARING COME TO THE MACINTOSH" OUTLOOK ON PROFESSIONAL COMPUTING,US,SANTA CLARA, CA, vol. 7, no. 9, page 12-13 XP000351939

## Description

### BACKGROUND OF THE INVENTION

### Field of the Invention

The present invention relates to a remote supporting system, device, and memory medium which enables a computer in a support center to support a user operating a computer smoothly by remote controlling the user's computer.

### Description of the Related Art

Since the operating system (OS hereinafter), e.g., windows 95 has been used in common, computer users connect various peripheral equipment to the Central Processing Unit (CPU) by themselves or use various application programs. To connect a new peripheral equipment to the CPU, users have to install an os called driver, which is to control inputs and outputs of the equipment, and set up many parameters characteristic to the equipment. All these operations should be done by users themselves. And recently, with respect to the application programs, not a manual book enclosed in the application program package but an online help shown in the screen is used generally.

It is, however, difficult and takes a large amount of time for users who are not used to operating computers to set up its parameter, with manual books in their hands. Moreover, there are some application programs which should be set up once more although they have already been set up before, and by that time users may have lost the manual books, which makes their setups impossible. Further, because online helps shown in the screen *are* too simple to follow in general, it is difficult to setup the application programs for users who operate them for the first time.

In those cases or in case of trouble, users may make a phone call to machine makers, application providers, or internet service providers and ask them the way to set up the parameters or the way to operate the application programs. However, supporters who indicate troubleshooting countermeasure cannot see the screen of user computers and it has been difficult for them to give users proper answers because all they could do is to imagine the state of the screen. And because aural data is the only way for users to convey the condition of the screen, the accurate information of trouble was difficult to be understood by the supporters.

Document D1=WO-A-97/49030 discloses an online support service using integrated audio information, image information and other data transmitted simultaneously or alternately over a single communication line to provide service and support functions. The communication line connects a user computer at a customer site and a remote customer service center. A customer service representative at the remote customer service center is able to control the user computer by remote control. Voice and other data communications are possible during remote control.

Document D1 does not disclose the features of a support computer transmitting command data to a user computer for requiring transmission of a list of application programs which are started in the user computer or are not started yet and a user computer responding to such command by transmitting the required list.

### SUMMARY OF THE INVENTION

A first object of the present invention is, therefore, to solve those problems by enabling a supporter computer and a user computer to hold the identical screen in common.

Still another object of the present invention is to transmit aural data in both directions through the circuit at the same time.

A further object of the present invention is to enable the user to receive troubleshooting countermeasure from supporters rapidly and properly.

To achieve the above objects, the present invention provides a remote support system as defined in claim 5, and comprising a user computer as defined in claim 1 and a support computer as defined in independent claim 3. Corresponding method claims are defined in independent claims 12, 8 and 10, respectively.

To connect the circuit, the user computer connects to an internet, and the support computer in the support center connects to an internet. When the support center is placed in a network where the user computer belongs to, the circuit can be connected through a local area network (LAN hereinafter) or a wide area network (WAN hereinafter).

Further, corresponding program claims are defined in claims 17, 15 and 16, respectively.

The program may provide a process in which the support computer in the support center displays the screen identical to that of the user computer through the circuit, and also a process in which the operation input data is transmitted from the support computer to the user computer through the circuit. Moreover, the present invention also provides a process in which the operation priority is changed to a side click operation with a mouse to be carried out between two screens of the user computer and the support computer. And the present invention also provides a process in which a command data is transmitted from one computer to the other computer to hold an application program in common, which is already started or not started yet in the other computer.

In the first aspect of the present invention, as described above, a support computer in a support center can display the screen identical to that of a user computer, and an operation data inputted in the support computer is identical to that inputted in the user computer. Accordingly, a supporter can see the screen of the user computer in the screen of the support computer and at once understand the condition of trouble in the user computer. Because the supporter can receive the condition of trouble by aural data from the user, the faster troubleshooting becomes possible. The supporter can at once understand what the user wants to do, and can send a command data directly to the user computer to setup its parameter or to switch the screen. Thus troubleshooting of the user computer becomes easier for the supporter.

In the second aspect of the invention, because a company, which provides a user supporting service of computer operation, and a user are connected through the internet, providing a general support to all the users who are connecting from extensive area becomes possible.

In the third aspect of the present invention, because the user can inform the supporter of the condition of trouble by aural data, checking in the screen of the user's own computer, the supporter and the user can communicate smoothly. And the user can see and understand the operation inputted by the supporter in the screen, informing the supporter of each steps of the user's understandings. Thus, supporting users becomes easier for supporters, and understanding of users become faster.

In the fourth aspect of the present invention, a program stored in a memory medium, which can carry out the process described above, is used on condition that it is installed in both the user computer and the support computer.

In the fifth aspect of the present invention, the supporting program is installed in the support computer in the support center. Further, in all these aspects, terms like "support center" or "user" are prescribed relatively. So reversely the screen of the support computer can be operated by the user in the screen of the user computer.

In the sixth aspect of the present invention, because an operation priority is given to a side of which click operation with a mouse is carried out, the user and the supporter can alternately operate in each screens of their computers. Accordingly, the user can, for example, operate in the way identical to that of the supporter operation as a review, and transmit the degree of the understanding through the identical screen, while he or she can have a troubleshooting countermeasure in the screen. Thus the supporter can confirm whether the user understands the operation precisely or not.

In the seventh aspect of the present invention, one computer can command the other computer to hold the identical application program in common which is already started or not been started yet. And that enables the supporter to hold the application in common which is already started in the user computer. Moreover, the supporter can select an application program, which the user has not started yet, start and hold it in common in the user computer with the user.

### BRIEF DESCRIPTION OF THE DRAWINGS

FIG. 1 is a view of a whole system according to a first embodiment of the present invention;
FIG. 2 is a view of a menu window shown in a screen according to the first embodiment;
FIG. 3 is a flow chart showing an operation of a user computer 1 according to the first embodiment;
FIG. 4 is a flow chart showing an operation of a support computer 3 according to the first embodiment; and
FIG. 5 is a view of a system according to other embodiment of the present invention.

### DETAILED DESCRIPTION OF THE PREFERRED EMBODIMENTS

Embodiments of the present invention will next be described in detail with reference to the drawings.

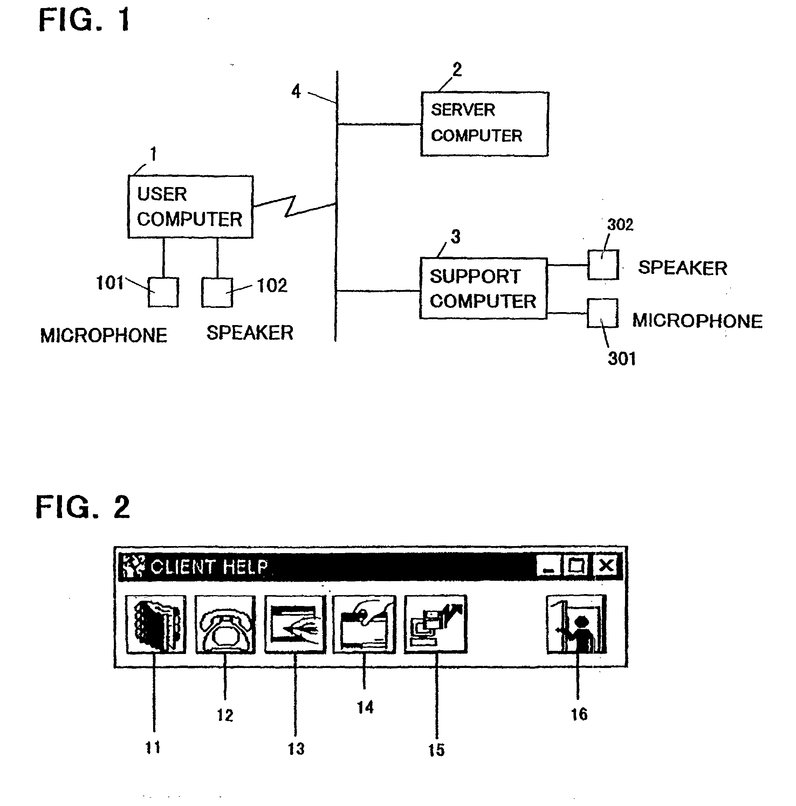

FIG. 1 is a view of showing a connection of computers in a network. A user computer 1 is installed in a office or in a house. The user computer 1 is connected to a server computer 2, with which an internet service provider provides internet service, through a telephone circuit 4. And a support computer 3, installed in a support center of a support service company which provides support service so as to support many users operating their computers, connects to the server computer 2 in the telephone network 4.

A support program of the present invention is to be used by installing in the user computer 1 and the support computer 3. This support program is operated under any OS, e.g. Windows 95, though it is not limited to it.

Then the operation of the system and device of the present invention is explained hereinafter. The support program is operated on condition that Windows 95 as OS is installed in a computer. When a user uses the computer 1 and has a trouble in operating it or setting its environment, the user selects and clicks an icon button in the computer 1 to connect to the server computer 2. Then a dial-up adapter, in which a telephone number is set up in advance to connect to the server computer 2 of a internet service provider in the telephone network, is started, and the user computer 1 is connected to the server computer 2.

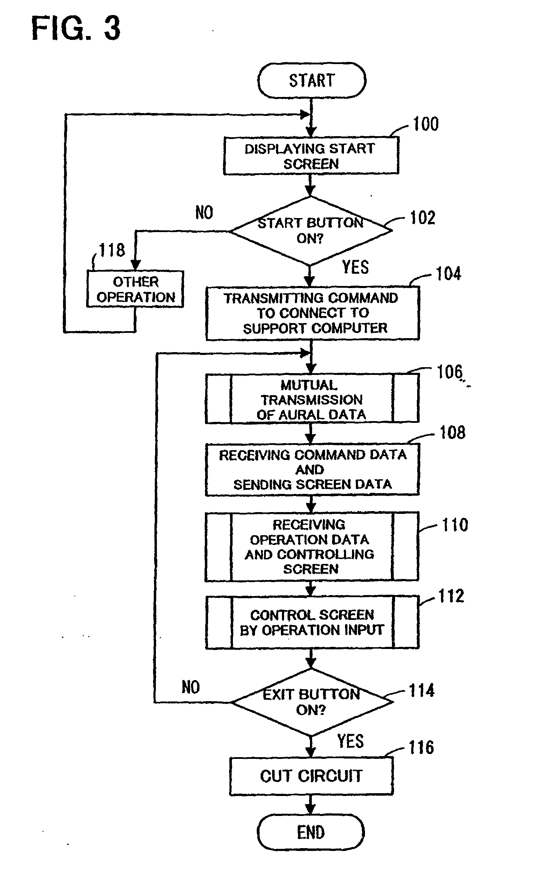

When the user clicks an icon button of the present support program in a screen of the computer 1, the support program is started. FIG. 3 shows a view of operating process of the support program in the user computer 1. At step 100 in FIG. 3, when the support program is started, a menu window shown in FIG. 2 appears. The menu window comprises six icon buttons. An icon button 11 is a button to set the environment of the user computer 1, e.g. a telephone number of a support center, passwords to access the center, and so on. An icon button 12 is a start button to connect the user computer 1 to the support computer 3. An icon button 13 is a button to command the user computer 1 and the support computer 3 to start up an application which is not started in common. An icon button 14 is a button to command the user computer 1 and the support computer 3 to hold an application to be operated in common which is already started. An icon button 15 is a button to command the user computer 1 to transfer its file. And an icon button 16 is a button to command the user computer 1 to exit the support program.

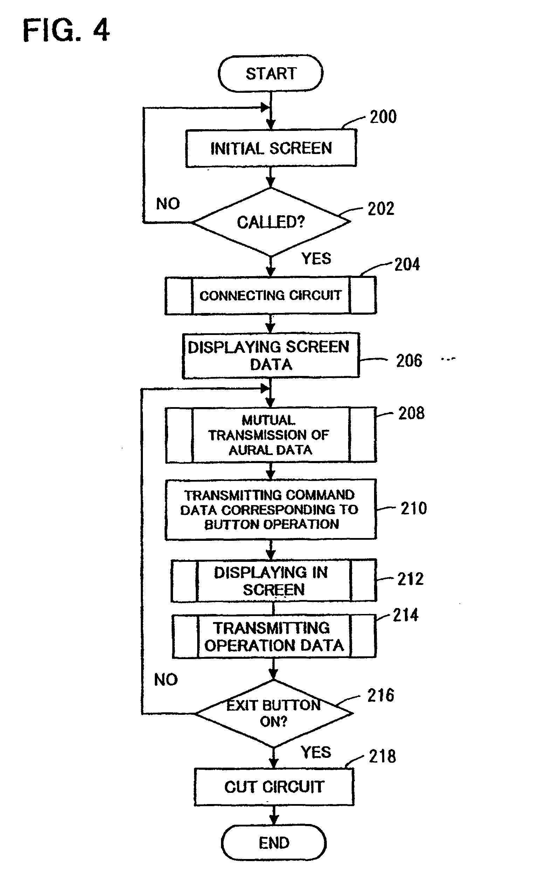

At step 102 of FIG. 3, when the icon button 12 is judged to be clicked with a mouse, a command is made to the server computer 2, which has already been connected to the user computer 1, to connect to the support computer 3 at step 104. The support computer 3 has already started the support program and is in a state of waiting. That is, the support computer 3 is showing a initial screen at step 200 shown in FIG. 4. When it is judged that at step 202 a circuit to the support computer is called by the server computer 2, the circuit connection process at step 204 is carried out. Accordingly, the telephone circuit is connected between the server computer 2 and the support computer 3. And when the circuit between the server computer 2 and the support compute 3 is connected, the user computer 1 is connected to the support computer 3 through the server computer 2.

When the circuit connection process is completed, the menu window shown in FIG. 2 also appears in the screen of the support computer 3 (step 206). The receiving treatment of aural data is carried out in the user computer 1 and the support computer 3 at step 106 (aural data transmitting device) and step 208, respectively. The aural signal inputted from a microphone 101 of the user computer 1 is sampled, transmitted to the support computer 3, and outputted from its speaker 302. Similarly, the aural signal inputted from a microphone 301 of the support computer 3 is sampled, transmitted to the user computer 1, and outputted from its speaker 102. The microphone 101 and the speaker 102 are parts of an aural data transmitter-receiver device. Under this condition, talking by aural data transmission becomes possible. This half duplex process enables the aural data to be transmitted with other data. Because the aural data is sampled, there is a large quantities of idle time. And even a continuous aural signal can be transmitted by so little data that other data can be transmitted by using the idle time. Because such transmitting process is a well-known prior art, its explanation is omitted.

First, a supporter, who provides support service to computer users, is informed from a user of the condition of trouble. The supporter tells the user not to operate any program but wait until the support computer 3 displays the identical screen as the user computer 1. The supporter clicks the icon button 14, which commands the support computer 3 to start up and hold the identical application as that of the user computer 1 operates in common. At step 210, a list of application programs which the user has already started in the user computer 1 is shown in the support computer 3. The supporter selects which application program to start and transmit a command data to the user computer 1. At step 108 (image data transmitting means), the user computer 1 receives the command data and transmits its own screen data to the support computer 3. The support computer 3 receives the screen data and displays the identical screen as that of the user computer 1 at step 212. Accordingly, both the support computer 3 and the user computer 1 display the identical screen. At step 214, when there were any input by a keyboard or operation with a mouse (called operation input hereinafter) in the support computer 3, its operation data is transmitted to the user computer 1. Then the user computer 1 receives the operation data at step 110 (remote control input means), and controls its own screen.

It is also possible to control its own screen when there is any operation input in the user computer 1 (step 112). Operations at steps 106 to 112 described above are carried out in the user computer 1 repeatedly at certain small amount of intervals, until it judges that the exit button 16 is clicked at step 114. Similarly, the support computer 3 carries out the operations at steps 208 to 214 repeatedly at certain small quantity of intervals.

Consequently, a mutual transmission of aural data between the user computer 1 and the support computer 3, a transmission of the own screen data from the user computer 1 to the support computer 3, and a transmission of operation input data from the support computer 3 to the user computer 1 are carried out in real time bases. The user computer 1 and the support computer 3 hold the identical screen in common, and their mutual operation input can be effective. When their operation inputs compete with each other, the operation input operated by clicking with a mouse is carried out preferentially.

Ordinary, while a troubleshooting countermeasure is being indicated by the supporter, the user does not give the user computer 1 an operation input. Thus the supporter can give an operation input to the user computer 1 on condition that the support computer 3 holds the identical screen as that of the user computer 1, and similarly the screen of the support computer 3 is controlled identically as that of the user computer 1.

When the exit button 16 of the user computer 1 and the support computer 3 is judged to be clicked at steps 116 and 216, the circuit cutting treatment is carried out at steps 116 and 218, respectively. When the icon button 13 is clicked in the screen of the support computer 3, the user computer 1 receives the command data and transmits a list of its application programs to the support computer 3. Then the support computer 3 selects and starts one application program from the list, holding the identical screen as the user computer 1 in common.

Thus, at a support service company, the support staffs, can carry out treatment steps directly in computers of many users, who need support in operating their computers, only by remote controlling in each of their own computers. Because the aural data is transmitted in both directions, supporters can indicate precise way of troubleshooting and user computers can recover from their trouble rapidly and precisely.

In the above-described embodiments, supporters and users are connected through internet; however, users may directly connect to the support computers through a network. Further, users may connect to support computers in a support center placed in a company through the LAN.

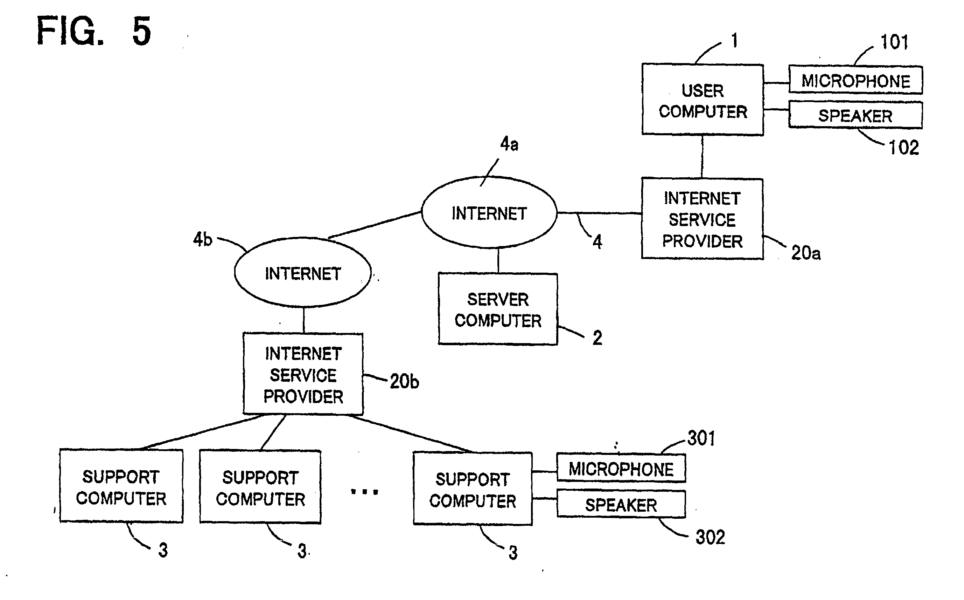

Further, the supporter can setup an environment of the user computer in place of the user. Additionally, as shown in FIG. 5, when the user computer 1 is connected to the support computer 3 through an internet 4a, an internet service provider 20b to which the support computer connects should not always the same as that of the user computer 1. When the user computer 1 connects to a server computer 2 through the internet 4a and get the address of one of the plural support computers 3 which is available to serve, the support computer 3 and the user computer 1 can transmit data directly and mutually through internet 4b by specifying the address of the user computer 1 and the support computer 3, respectively. The server computer 2 controls an address, a condition, and a connecting time of each user computers 1. In short, the user computer 1 should not always pass the server computer 2 to connect to the support computer 3 except when it begins and cuts the connection of the circuit.

While the invention has been described in connection with what are presently considered to be the most practical and preferred embodiments, it is to be understood that the invention is not to be limited to the disclosed embodiments, but on the contrary, the description is intended to cover various modifications and equivalent arrangements included within the spirit and scope of the appended claims.

Obviously, numerous modifications and variations of the present invention are possible in light of the above teachings. It is therefore to be understood that within the scope of the appended claims, the invention may be practiced otherwise than as specifically described herein.

A remote support system by which a support computer in a support center supports a user computer by holding an identical screen as that of the user computer in common is disclosed. The remote support system, wherein a user computer connects to a support computer in a circuit, the support computer in a support center holds the identical screen as that of the user computer in common, an aural data of the user computer and the support computer are transmitted in both directions in the circuit, and a supporter supports a user by operating in the identical screen as that of the user computer displayed on support computer and sending the aural data enables the user to understand through the identical screen and the aural data from the supporter.

## Claims

1. A user computer (1) used for a remote support system which enables a supporter to provide support to a user computer with respect to operating an application program in said user computer by holding a screen of said user computer and a support computer (3) in common, comprising:
a connecting means (12,104) for connecting said user computer to said support computer through a circuit (2,4);
a means (108) for responding to a command data (13,14) from said support computer, sending a list of application programs which are started or not started yet, and holding an application program which is selectively designated from said list of started application programs in common or starting and holding said application program which is not started yet in common;
an operation input means (112) for inputting an operation data to a screen displaying said application program of said user computer which is designated and started by said support computer;
a sending means (108) for sending a screen data of said application program started in said user computer in order that said support computer and said user computer hold a screen in common;
a remote operation input means (110) for receiving an operation data which is input to a screen in said support computer by said supporter and transmitted from said support computer to said user computer through said circuit (2,4), and for inputting said operation data as a command for said application program which is started and held in common; and
an aural data transmitter-receiver device (101, 102) for inputting an aural data of said user and transmitting said aural data to said support computer, and for receiving an aural data of said supporter transmitted from said support computer and outputting said aural data.

2. A user computer according to claim 1, wherein said operation input means in either screen of said support computer or said user computer is made effective as response to a mouse click input.

3. A support computer (3) used for a remote support system which enables a supporter to provide support to a user computer (1) with respect to operating an application program in said user computer by holding a screen of said user computer and said support computer in common, comprising:
a command means (210) for starting and holding an application program in common, which sends a command data (14) to said user computer for requiring transmission of a list of application programs which are started in said user computer and selectively designates an application program which is started from said list received from said user computer in order to command to hold said application program in common, or which sends a command data (13) to said user computer for requiring transmission of a list of application programs which are not started yet in said user computer and selectively designates an application program which is not started yet from said list in order to send a command data to start and hold said application program in common which is not yet started;
a screen data receiving means (206) for receiving a screen data of said application program in said user computer designated by said command means and displaying said screen data of said user computer on a screen of said support computer;
an input (214) means for inputting an operation input data for said application program held in common to said screen displayed by said screen data receiving means;
a sending means (214) for sending said operation input data which is input by said input means as an operation input data to said application program held by said user computer and said support computer in common; and
an aural data transmitter-receiver means (301, 302) for inputting an aural data of said supporter and transmitting said aural data to said user computer, and for receiving an aural data of said user transmitted from said user computer and outputting said aural data.

4. A support computer according to claim 3, wherein said operation input means in either screen of said support computer or said user computer is made effective in response to a mouse click input.

5. A remote support system comprising a user computer according to claim 1 and a support computer according to claim 3.

6. A remote support system according to claim 5, wherein said circuits (2,4) between said user computer and said support computer is connected when said user computer connects to an internet and said support computer connects to an internet.

7. A remote support system according to claim 5 or claim 6, wherein said operation input means in either screen of said support computer or said user computer is made effective in response to a mouse click input.

8. A method for a user computer (1) used for a remote support system which enables a supporter to provide support to a user computer (1) with respect to operating an application program in said user computer by holding a screen of said user computer and a support computer in common, comprising:
a connecting step for connecting said user computer to said support computer through a circuit (2,4);
a step (108) for responding to a command data from said support computer, sending a list of application programs which are started or not started yet, and holding an application program which is selectively designated from said list of started application programs in common or starting and holding said application program which is not started yet in common;
an operation input step (112) for inputting an operation data to a screen displaying said application program of said user computer which is designated and started by said support computer;
a sending step (108) for sending a screen data of said application program started in said user computer in order that said support computer and said user computer hold a screen in common;
a remote operation input step (110) for receiving an operation data which is input to a screen in said support computer by said supporter and transmitted from said support computer to said user computer through said circuit, and for inputting said operation data as a command for said application program which is started and held in common; and
an aural data transmitting-receiving step (106) for inputting an aural data of said user and transmitting said aural data to said support computer, and for receiving an aural data of said supporter transmitted from said support computer and outputting said aural data.

9. A method according to claim 8, further comprising a step for making said operation input effective in either screen of said support computer or said user computer in response to a mouse click input.

10. A method for a support computer (3) used for a remote support system which enables a supporter to provide support to a user computer (1) with respect to operating an application program in said user computer by holding a screen of said user computer and said support computer (3) in common, comprising:
a command step (210) for starting and holding an application program in common, which sends a command data to said user computer for requiring transmission of a list of application programs which are started in said user computer and selectively designates an application program which is started from said list received from said user computer in order to command to hold said application program in common, or which sends a command data to said user computer for requiring transmission of a list of application programs which are not started yet in said user computer and selectively designates an application program which is not started yet from said list in order to send a command data to start and hold said application program in common which is not yet started;
a screen data receiving step (206) for receiving a screen data of said application program in said user computer designated by said command step and displaying said screen data of said user computer on a screen of said support computer;
an input step (214) for inputting an operation input data for said application program held in common to said screen displayed by said screen data receiving step;
a sending step (214) for sending said operation input data which is input by said input step as an operation input data to said application program held by said user computer and said support computer in common; and
an aural data transmitting-receiving step (208), for inputting an aural data of said supporter and transmitting said aural data to said user computer, and for receiving an aural data of said user transmitted from said user computer and outputting said aural data.

11. A method according to claim 10, further comprising a step for making said operation input effective in either screen of said support computer or said user computer in response to a mouse click input.

12. A remote support method comprising the steps of a method according to claim 8 and the steps of a method according to claim 10.

13. A method according to claim 12, wherein said circuit (2,4) between said user computer and said support computer is connected when said user computer connects to an internet and said support computer connects to an internet.

14. A method according to claim 12 or claim 13, further comprising a step for making said operation input effective in either screen of said support computer or said user computer in response to a mouse click input.

15. A program for a user computer (1) used for a remote support system which enables a supporter to provide support to a user computer (1) with respect to operating an application program in said user computer by holding a screen of said user computer and a support computer (3) in common, said program being adapted for carrying out the steps of a method according to claim 8 or claim 9.

16. A program for a support computer (3) used for a remote support system which enables a supporter to provide support to a user computer (1) with respect to operating an application program in said user computer by holding a screen of said user computer and a support computer in common, said program being adapted for carrying out the steps of a method according to claim 10 or claim 11.

17. A program for a remote support system which enables a supporter to provide support to a user computer (1) with respect to operating an application program in said user computer by holding a screen of said user computer and a support computer (3) in common, said program being adapted for carrying out the steps of a method according to any one of claims 12 to 14.

## Patentansprüche

1. Benutzercomputer (1), der für ein Fernunterstützungssystem verwendet wird, das es einem Unterstützer ermöglicht, Unterstützung für einen Benutzercomputer mit Bezug auf den Betrieb eines Anwendungsprogramms in dem Benutzercomputer bereitzustellen, indem ein Bildschirm des Benutzercomputers und eines Unterstützungscomputers (3) gemeinsam gehalten wird, mit:
einer Verbindungseinrichtung (12, 104) zum Verbinden des Benutzercomputers mit dem Unterstützungscomputer über eine Schaltung (2, 4);
einer Einrichtung (108) zum Ansprechen auf Befehlsdaten (13, 14) von dem Unterstützungscomputer, Senden einer Liste von Anwendungsprogrammen, die gestartet oder noch nicht gestartet sind, und gemeinsamen Halten eines Anwendungsprogramms, das aus der Liste von gestarteten Anwendungsprogrammen selektiv bestimmt: wird, oder Starten und gemeinsamen Halten des Anwendungsprogramms, das noch nicht gestartet ist;
einer Betriebseingabeeinrichtung (112) zum Eingeben von Betriebsdaten in einen das Anwendungsprogramm des Benutzercomputers, das durch den Unterstützungscomputer bestimmt und gestartet wird, anzeigenden Bildschirm;
einer Sendeeinrichtung (108) zum Senden von Bildschirmdaten des in dem Benutzercomputer gestarteten Anwendungsprogramms, damit der Unterstützungscomputer und der Benutzercomputer einen Bildschirm gemeinsam halten;
einer Fernbetriebseingabeeinrichtung (110) zum Empfangen von Betriebsdaten, die durch den Unterstützer in einen Bildschirm in dem Unterstützungscomputer eingegeben und über die Schaltung (2, 4) von dem Unterstützungscomputer zu dem Benutzercomputer übertragen werden, und zum Eingeben der Betriebsdaten als einen Befehl für das Anwendungsprogramm, das gestartet und gemeinsam gehalten wird; und
einer Sende-/Empfangsvorrichtung für akustische Daten (101, 102) zum Eingeben von akustischen Daten des Benutzers und Übertragen der akustischen Daten zu dem Unterstützungscomputer, und zum Empfangen von von dem Unterstützungscomputer übertragenen akustischen Daten des Unterstützers und Ausgeben der akustischen Daten.

2. Benutzercomputer nach Anspruch 1, wobei die Betriebseingabeeinrichtung in einem Bildschirm des Unterstützungscomputers oder des Benutzercomputers im Ansprechen auf eine Mausclickeingabe wirksam ausgebildet wird.

3. Unterstützungscomputer (3), der für ein Fernunterstützungssystem verwendet wird, das es einem Unterstützer ermöglicht, Unterstützung für einen Benutzercomputer (1) mit Bezug auf den Betrieb eines Anwendungsprogramms in dem Benutzercomputer bereitzustellen, indem ein Bildschirm des Benutzercomputers und des Unterstützungscomputers gemeinsam gehalten wird, mit:
einer Befehlseinrichtung (210) zum Starten und gemeinsamen Halten eines Anwendungsprogramms, die Befehlsdaten (14) zu dem Benutzercomputer sendet, um eine Übertragung einer Liste von Anwendungsprogrammen, die in dem Benutzercomputer gestartet sind, anzufordern und ein Anwendungsprogramm, das gestartet ist, aus der von dem Benutzercomputer empfangenen Liste selektiv bestimmt, um ein gemeinsames Halten des Anwendungsprogramms zu befehlen, oder die Befehlsdaten (13) zu dem Benutzercomputer sendet, um eine Übertragung einer Liste von Anwendungsprogrammen, die in dem Benutzercomputer noch nicht gestartet sind, anzufordern und ein Anwendungsprogramm, das noch nicht gestartet ist, aus der Liste selektiv bestimmt, um Befehlsdaten zum Starten und gemeinsamen Halten des Anwendungsprogramms, das noch nicht gestartet ist, zu senden;
einer Bildschirmdatenempfangseinrichtung (206) zum Empfangen von Bildschirmdaten des durch die Befehlseinrichtung bestimmten Anwendungsprogramms in dem Benutzercomputer und Anzeigen der Bildschirmdaten des Benutzercomputers auf einem Bildschirm des Unterstützungscomputers;
einer Eingabeeinrichtung (214) zum Eingeben von Betriebseingabedaten für das gemeinsam gehaltene Anwendungsprogramm in den durch die Bildschirmdatenempfangseinrichtung angezeigten Bildschirm;
einer Sendeeinrichtung (214) zum Senden der Betriebseingabedaten, die durch die Eingabeeinrichtung eingegeben werden, als Betriebseingabedaten zu dem durch den Benutzercomputer und den Unterstützungscomputer gemeinsam gehaltenen Anwendungsprogramm; und
einer Sende-/Empfangseinrichtung für akustische Daten (301, 302) zum Eingeben von akustischen Daten des Unterstützers und Übertragen der akustischen Daten zu dem Benutzercomputer, und zum Empfangen von von dem Benutzercomputer übertragenen akustischen Daten des Benutzers und Ausgeben der akustischen Daten.

4. Unterstützungscomputer nach Anspruch 3, wobei die Betriebseingabeeinrichtung in einem Bildschirm des Unterstützungscomputers oder des Benutzercomputers im Ansprechen auf eine Mausclickeingabe wirksam ausgebildet wird.

5. Fernunterstützungssystem mit einem Benutzercomputer nach Anspruch 1 und einem Unterstützungscomputer nach Anspruch 3.

6. Fernunterstützungssystem nach Anspruch 5, wobei die Schaltung (2, 4) zwischen dem Benutzercomputer und dem Unterstützungscomputer verbunden wird, wenn der Benutzercomputer mit einem Verbund mehrerer Netze in Verbindung tritt und der Unterstützungscomputer mit einem Verbund mehrerer Netze in Verbindung tritt.

7. Fernunterstützungssystem nach Anspruch 5 oder Anspruch 6, wobei die Betriebseingabeeinrichtung in einem Bildschirm des Unterstützungscomputers oder des Benutzercomputers im Ansprechen auf eine Mausclickeingabe wirksam ausgebildet wird.

8. Verfahren für einen Benutzercomputer (1), der für ein Fernunterstützungssystem verwendet wird, das es einem Unterstützer ermöglicht, Unterstützung für einen Benutzercomputer (1) mit Bezug auf den Betrieb eines Anwendungsprogramms in dem Benutzercomputer bereitzustellen, indem ein Bildschirm des Benutzercomputers und eines Unterstützungscomputers gemeinsam gehalten wird, mit:
einem Verbindungsschritt zum Verbinden des Benutzercomputers mit dem Unterstützungscomputer über eine Schaltung (2, 4);
einem Schritt (108) zum Ansprechen auf Befehlsdaten von dem Unterstützungscomputer, Senden einer Liste von Anwendungsprogrammen, die gestartet oder noch nicht gestartet sind, und gemeinsamen Halten eines Anwendungsprogramms, das aus der Liste von gestarteten Anwendungsprogrammen selektiv bestimmt wird, oder Starten und gemeinsamen Halten des Anwendungsprogramms, das noch nicht gestartet ist;
einem Betriebseingabeschritt (112) zum Eingeben von Betriebsdaten in einen das Anwendungsprogramm des Benutzercomputers, das durch den Unterstützungscomputer bestimmt und gestartet wird, anzeigenden Bildschirm;
einem Sendeschritt (108) zum Senden von Bildschirmdaten des in dem Benutzercomputer gestarteten Anwendungsprogramms, damit der Unterstützungscomputer und der Benutzercomputer einen Bildschirm gemeinsam halten;
einem Fernbetriebseingabeschritt (110) zum Empfangen von Betriebsdaten, die durch den Unterstützer in einen Bildschirm in dem Unterstützungscomputer eingegeben und über die Schaltung von dem Unterstützungscomputer zu dem Benutzercomputer übertragen werden, und zum Eingeben der Betriebsdaten als einen Befehl für das Anwendungsprogramm, das gestartet und gemeinsam gehalten wird; und
einem Sende-/Empfangsschritt für akustische Daten (106) zum Eingeben von akustischen Daten des Benutzers und Übertragen der akustischen Daten zu dem Unterstützungscomputer, und zum Empfangen von von dem Unterstützungscomputer übertragenen akustischen Daten des Unterstützers und Ausgeben der akustischen Daten.

9. Verfahren nach Anspruch 8, ferner mit einem Schritt zum wirksam Ausbilden der Betriebseingabe in einem Bildschirm des Unterstützungscomputers oder des Benutzercomputers im Ansprechen auf eine Mausclickeingabe.

10. Verfahren für einen Unterstützungscomputer (3), der für ein Fernunterstützungssystem verwendet wird, das es einem Unterstützer ermöglicht, Unterstützung für einen Benutzercomputer (1) mit Bezug auf den Betrieb eines Anwendungsprogramms in dem Benutzercomputer bereitzustellen, indem ein Bildschirm des Benutzercomputers und des Unterstützungscomputers (3) gemeinsam gehalten wird, mit:
einem Befehlsschritt (210) zum Starten und gemeinsamen Halten eines Anwendungsprogramms, der Befehlsdaten zu dem Benutzercomputer sendet, um eine. Übertragung einer Liste von Anwendungsprogrammen, die in dem Benutzercomputer gestartet sind, anzufordern und ein Anwendungsprogramm, das gestartet ist, aus der von dem Benutzercomputer empfangenen Liste selektiv bestimmt, um ein gemeinsames Halten des Anwendungsprogramms zu befehlen, oder der Befehlsdaten zu dem Benutzercomputer sendet, um eine Übertragung einer Liste von Anwendungsprogrammen, die in dem Benutzercomputer noch nicht gestartet sind, anzufordern und ein Anwendungsprogramm, das noch nicht gestartet ist, aus der Liste selektiv bestimmt, um Befehlsdaten zum Starten und gemeinsamen Halten des Anwendungsprogramms, das noch nicht gestartet ist, zu senden;
einem Bildschirmdatenempfangsschritt (206) zum Empfangen von Bildschirmdaten des durch den Befehlsschritt bestimmten Anwendungsprogramms in dem Benutzercomputer und Anzeigen der Bildschirmdaten des Benutzercomputers auf einem Bildschirm des Unterstützungscomputers;
einem Eingabeschritt (214) zum Eingeben von Betriebseingabedaten für das gemeinsam gehaltene Anwendungsprogramm in den durch den Bildschirmdatenempfangsschritt angezeigten Bildschirm;
einem Sendeschritt (214) zum Senden der Betriebseingabedaten, die durch den Eingabeschritt eingegeben werden, als Betriebseingabedaten zu dem durch den Benutzercomputer und den Unterstützungscomputer gemeinsam gehaltenen Anwendungsprogramm; und
einem Sende-/Empfangsschritt für akustische Daten (208) zum Eingeben von akustischen Daten des Unterstutzers und Übertragen der akustischen Daten zu dem Benutzercomputer, und zum Empfangen von von dem Benutzercomputer übertragenen akustischen Daten des Benutzers und Ausgeben der akustischen Daten.

11. Verfahren nach Anspruch 10, ferner mit einem Schritt zum wirksam Ausbilden der Betriebseingabe in einem Bildschirm des Unterstützungscomputers oder des Benutzercomputers im Ansprechen auf eine Mausclickeingabe.

12. Fernunterstützungsverfahren mit den Schritten eines Verfahrens nach Anspruch 8 und den Schritten eines Verfahrens nach Anspruch 10.

13. Verfahren nach Anspruch 12, wobei die Schaltung (2, 4) zwischen dem Benutzercomputer und dem Unterstützungscomputer verbunden wird, wenn der Benützercomputer mit einem Verbund mehrerer Netze in Verbindung tritt und der Unterstützungscomputer mit einem Verbund mehrerer Netze in Verbindung tritt.

14. Verfahren nach Anspruch 12 oder Anspruch 13, ferner mit einem Schritt zum wirksam Ausbilden der Betriebseingabe in einem Bildschirm des Unterstützungscomputers oder des Benutzercomputers im Ansprechen auf eine Mausclickeingabe.

15. Programm für einen Benutzercomputer (1), der für ein Fernunterstützungssystem verwendet wird, das es einem Unterstützer ermöglicht, Unterstützung für einen Benutzercomputer (1) mit Bezug auf den Betrieb eines Anwendungsprogramms in dem Benutzercomputer bereitzustellen, indem ein Bildschirm des Benutzercomputers und eines Unterstützungscomputers (3) gemeinsam gehalten wird, wobei das Programm zur Ausführung der Schritte eines Verfahrens nach Anspruch 8 oder Anspruch 9 eingerichtet ist.

16. Programm für einen Unterstützungscomputer (3), der für ein Fernunterstützungssystem verwendet wird, das es einem Unterstützer ermöglicht, Unterstützung für einen Benutzercomputer (1) mit Bezug auf den Betrieb eines Anwendungsprogramms in dem Benutzercomputer bereitzustellen, indem ein Bildschirm des Benutzercomputers und eines Unterstützungscomputers gemeinsam gehalten wird, wobei das Programm zur Ausführung der Schritte eines Verfahrens nach Anspruch 10 oder Anspruch 11 eingerichtet ist.

17. Programm für ein Fernunterstützungssystem, das es einem Unterstützer ermöglicht, Unterstützung für einen Benutzercomputer (1) mit Bezug auf den Betrieb eines Anwendungsprogramms in dem Benutzercomputer bereitzustellen, indem ein Bildschirm des Benutzercomputers und eines Unterstützungscomputers (3) gemeinsam gehalten wird, wobei das Programm zur Ausführung der Schritte eines Verfahrens nach einem der Ansprüche 12 bis 14 eingerichtet ist.

## Revendications

1. Ordinateur utilisateur (1) utilisé pour un système d'assistance à distance qui permet à un assistant de fournir une assistance à un ordinateur utilisateur concernant le fonctionnement d'un programme d'application dans ledit ordinateur utilisateur en ayant en commun un écran dudit ordinateur utilisateur et d'un ordinateur d'assistance (3), comprenant :
des moyens de connexion (12, 104) pour connecter ledit ordinateur utilisateur audit ordinateur d'assistance par l'intermédiaire d'un circuit (2, 4) ;
des moyens (108) pour répondre à des données d'ordre (13, 14) provenant dudit ordinateur d'assistance, pour envoyer une liste de programmes d'application qui ont été lancés ou ne sont pas encore lancés, et pour avoir en commun un programme d'application qui est indiqué de manière sélective à partir de ladite liste de programmes d'application lancés, ou pour lancer et avoir en commun ledit programme d'application qui n'est pas encore lancé ;
des moyens d'entrée de fonctionnement (112) pour entrer des données de fonctionnement sur un écran affichant ledit programme d'application dudit ordinateur utilisateur qui est désigné et lancé par ledit ordinateur d'assistance ;
des moyens d'envoi (108) pour envoyer des données d'écran dudit programme d'application lancé dans ledit ordinateur utilisateur afin que ledit ordinateur d'assistance et ledit ordinateur utilisateur aient un écran en commun ;
des moyens d'entrée de fonctionnement à distance (110) pour recevoir des données de fonctionnement qui sont entrées sur un écran dans ledit ordinateur d'assistance par ledit assistant et transmises depuis ledit ordinateur d'assistance vers ledit ordinateur utilisateur à travers ledit circuit (2, 4), et pour entrer lesdites données de fonctionnement sous forme de commande audit programme d'application qui est lancé et mis en commun ; et
un dispositif émetteur-récepteur de données auditives (101, 102) pour entrer des données auditives dudit utilisateur et transmettre lesdites données auditives audit ordinateur d'assistance, et pour recevoir des données auditives dudit assistant transmises par ledit ordinateur d'assistance et délivrer lesdites données auditives.

2. Ordinateur utilisateur selon la revendication 1, dans lequel lesdits moyens d'entrée de fonctionnement sur l'écran soit dudit ordinateur d'assistance soit dudit ordinateur utilisateur sont activés en réponse à une entrée par clic de souris.

3. Ordinateur d'assistance (3) utilisé pour un système d'assistance à distance qui permet à un assistant de fournir une assistance à un ordinateur utilisateur (1) concernant le fonctionnement d'un programme d'application dans ledit ordinateur utilisateur en ayant en commun un écran dudit ordinateur utilisateur et dudit ordinateur d'assistance, comprenant :
des moyens de commande (210) pour lancer et avoir en commun un programme d'application, qui envoient des données d'ordre (14) audit ordinateur utilisateur pour demander la transmission d'une liste de programmes d'application qui sont lancés dans ledit ordinateur utilisateur, et désignent de manière sélective un programme d'application qui est lancé à partir de ladite liste reçue dudit ordinateur utilisateur afin d'ordonner d'avoir ledit programme d'application en commun, ou qui envoient des données d'ordre (13) audit ordinateur utilisateur pour demander la transmission d'une liste de programmes d'application qui ne sont pas encore lancés dans ledit ordinateur utilisateur, et désignent de manière sélective un programme d'application qui n'est pas encore lancé à partir de ladite liste afin d'envoyer des données d'ordre pour lancer et avoir en commun ledit programme d'application qui n'est pas encore lancé ;
des moyens de réception de données d'écran (206) pour recevoir des données d'écran dudit programme d'application dans ledit ordinateur utilisateur désigné par lesdits moyens de commande et pour afficher lesdites données d'écran dudit ordinateur utilisateur sur un écran dudit ordinateur d'assistance ;
des moyens d'entrée (214) pour entrer des données d'entrée de fonctionnement pour ledit programme d'application maintenu en commun audit écran affiché par lesdits moyens de réception de données d'écran ;
des moyens d'envoi (214) pour envoyer lesdites données d'entrée de fonctionnement qui sont entrées par lesdits moyens d'entrée sous forme de données d'entrée de fonctionnement audit programme d'application détenu en commun par ledit ordinateur utilisateur et ledit ordinateur d'assistance ; et
des moyens formant émetteur-récepteur de données auditives (301, 302) pour entrer des données auditives dudit assistant et transmettre lesdites données auditives audit ordinateur utilisateur, et pour recevoir des données auditives dudit utilisateur transmises par ledit ordinateur utilisateur et délivrer lesdites données auditives.

4. Ordinateur d'assistance selon la revendication 3, dans lequel lesdits moyens d'entrée de fonctionnement sur l'écran soit dudit ordinateur d'assistance soit dudit ordinateur utilisateur sont activés en réponse à une entrée par clic de souris.

5. Système d'assistance à distance comprenant un ordinateur utilisateur selon la revendication 1 et ordinateur d'assistance selon la revendication 3.

6. Système d'assistance à distance selon la revendication 5, dans lequel ledit circuit (2, 4) entre ledit ordinateur utilisateur et ledit ordinateur d'assistance est connecté lorsque ledit ordinateur utilisateur se connecte à un réseau mondial et que ledit ordinateur d'assistance se connecte à un réseau mondial.

7. Système d'assistance à distance selon la revendication 5 ou la revendication 6, dans lequel lesdits moyens d'entrée de fonctionnement sur l'écran soit dudit ordinateur d'assistance soit dudit ordinateur utilisateur sont activés en réponse à une entrée par clic de souris.

8. Procédé pour un ordinateur utilisateur (1) utilisé pour un système d'assistance à distance qui permet à un assistant de fournir une assistance à un ordinateur utilisateur (1) concernant le fonctionnement d'un programme d'application dans ledit ordinateur utilisateur en ayant en commun un écran dudit ordinateur utilisateur et d'un ordinateur d'assistance, comprenant :
une étape de connexion pour connecter ledit ordinateur utilisateur à un ordinateur d'assistance à travers un circuit (2, 4) ;
une étape (108) pour répondre à des données d'ordre provenant dudit ordinateur d'assistance, envoyer une liste de programmes d'application qui sont lancés ou qui ne sont pas encore lancés, et avoir en commun un programme d'application qui est désigné de manière sélective à partir de ladite liste de programmes d'application lancés, ou lancer et avoir en commun ledit programme d'application qui n'est pas encore lancé ;
une étape d'entrée de fonctionnement (112) pour entrer des données de fonctionnement sur un écran affichant ledit programme d'application dudit ordinateur utilisateur qui est désigné et lancé par ledit ordinatéur d'assistance ;
une étape d'envoi (108) pour envoyer des données d'écran dudit programme d'application lancé dans ledit ordinateur utilisateur afin que ledit ordinateur d'assistance et ledit ordinateur utilisateur aient un écran en commun ;
une étape d'entrée de fonctionnement à distance (110) pour recevoir des données de fonctionnement qui sont entrées sur un écran dans ledit ordinateur d'assistance par ledit assistant et transmises depuis ledit ordinateur d'assistance audit ordinateur utilisateur par l'intermédiaire dudit circuit, et pour entrer lesdites données de fonctionnement sous forme d'ordre pour ledit programme d'application qui est lancé et maintenu en commun ; et
une étape d'émission-réception de données auditives (106) pour entrer des données auditives dudit utilisateur et transmettre lesdites données auditives audit ordinateur d'assistance, et pour recevoir des données auditives dudit assistant transmises en provenance dudit ordinateur d'assistance et délivrer lesdites données auditives.

9. Procédé selon la revendication 8, comprenant en outre une étape pour rendre active ladite entrée de fonctionnement sur l'écran soit dudit ordinateur d'assistance soit dudit ordinateur utilisateur en réponse à une entrée par clic de souris.

10. Procédé pour un ordinateur d'assistance (3) utilisé pour un système d'assistance à distance qui permet à un assistant de fournir une assistance à un ordinateur utilisateur (1) concernant le fonctionnement d'un programme d'application dans ledit ordinateur utilisateur en ayant en commun un écran dudit ordinateur utilisateur et dudit ordinateur d'assistance (3), comprenant :
une étape de commande (210) pour lancer et avoir en commun un programme d'application, qui envoie des données d'ordre audit ordinateur utilisateur pour demander la transmission d'une liste de programmes d'application qui sont lancés dans ledit ordinateur utilisateur et qui désigne de manière sélective un programme d'application qui est lancé à partir de ladite liste reçue dudit ordinateur utilisateur afin de donner l'ordre d'avoir en commun ledit programme d'application, ou qui envoie des données d'ordre audit ordinateur utilisateur pour demander la transmission d'une liste de programmes d'application qui ne sont pas encore lancés dans ledit ordinateur utilisateur et désigne de manière sélective un programme d'application qui n'est pas encore lancé à partir de ladite liste afin d'envoyer des données d'ordre pour lancer et avoir en commun ledit programme d'application qui n'est pas encore lancé ;
une étape de réception de données d'écran (206) pour recevoir des données d'écran dudit programme d'application dans ledit ordinateur utilisateur désigné par ladite étape de commande et pour afficher lesdites données d'écran dudit ordinateur utilisateur sur un écran dudit ordinateur d'assistance ;
une étape d'entrée (214) pour entrer des données d'entrée de fonctionnement pour ledit programme d'application détenu en commun sur ledit écran affiché par ladite étape de réception de données d'écran ;
une étape d'envoi (214) pour envoyer lesdites données d'entrée de fonctionnement qui sont entrées par ladite étape d'entrée en tant que données d'entrée de fonctionnement pour ledit programme d'application détenu en commun par ledit ordinateur utilisateur et ledit ordinateur d'assistance ; et
une étape d'émission-réception de données auditives (208), pour entrer des données auditives dudit assistant et transmettre lesdlites données auditives audit ordinateur utilisateur, et pour recevoir des données auditives dudit utilisateur transmises à partir dudit ordinateur utilisateur et délivrer lesdites données auditives.

11. Procédé selon la revendication 10, comprenant en outre une étape pour rendre active ladite entrée de fonctionnement sur l'écran soit dudit ordinateur d'assistance soit dudit ordinateur utilisateur en réponse à une entrée par clic de souris.

12. Procédé d'assistance à distance comprenant les étapes d'un procédé selon la revendication 8 et les étapes d'un procédé selon la revendication 10.

13. Procédé selon la revendication 12, dans lequel ledit circuit (2, 4) entre ledit ordinateur utilisateur et ledit ordinateur d'assistance est connecté lorsque ledit ordinateur utilisateur se connecte à un réseau mondial et que ledit ordinateur d'assistance se connecte à un réseau mondial.

14. Procédé selon la revendication 12 ou la revendication 13, comprenant en outre une étape pour rendre active ladite entrée de fonctionnement sur l'écran soit dudit ordinateur d'assistance soit dudit ordinateur utilisateur en réponse à une entrée par clic de souris.

15. Programme pour un ordinateur utilisateur (1) utilisé pour un système d'assistance à distance qui permet à un assistant de fournir une assistance à un ordinateur utilisateur (1) concernant le fonctionnement d'un programme d'application dans ledit ordinateur utilisateur en ayant en commun un écran dudit ordinateur utilisateur et d'un ordinateur d'assistance (3), ledit programme étant adapté pour accomplir les étapes d'un procédé selon la revendication 8 ou la revendication 9.

16. Programme pour un ordinateur d'assistance (3) utillisé pour un système d'assistance à distance qui permet à un assistant de fournir une assistance à un ordinateur utilisateur (1) concernant le fonctionnement d'un programme d'application dans ledit ordinateur utilisateur en ayant en commun un écran dudit ordinateur utilisateur et d'un ordinateur d'assistance, ledit programme étant adapté pour accomplir les étapes d'un procédé selon la revendication 10 ou la revendication 11.

17. Programme pour un système d'assistance à distance qui permet à un assistant de fournir une assistance à un ordinateur utilisateur (1) concernant le fonctionnement d'un programme d'application dans ledit ordinateur utilisateur en ayant en commun un écran dudit ordinateur utilisateur et d'un ordinateur d'assistance (3), ledit programme étant adapté pour accomplir les étapes d'un procédé selon l'une quelconque des revendications 12 à 14.
